# EUROPEAN PATENT APPLICATION

(11) **EP 4 603 175 A1**
(43) Date of publication of application: **20.08.2025**
(21) Application number: 25157017.2
(22) Date of filing: 11.02.2025
(51) Int. Cl.: B01F 31/22

(54) **IMBALANCE COMPENSATED SHAKER FOR MIXING FLUIDIC SAMPLES**

(30) Priority: 12.02.2024 LU 103245
(71) Applicant: Stratec SE, 75217 Birkenfeld (DE)
(72) Inventor: Horvath, Tibor, 75217 Birkenfeld (DE); Muresan, Stefan Dinu, 75217 Birkenfeld (DE)
(74) Representative: Tegethoff, Sebastian

(57) **Abstract**

The present disclosure relates to a shaker for actuating a fluidic sample in a container, comprising a first mass from the following components:

- a shaking plate (5) which is connected by a first linking rod (11) to a first eccentric drive (10) which is connected to an axis (15);

- a second mass from the following components which is moved in opposition to the first mass: a counterweight (40) which is connected by a second linking rod (21) to a second eccentric drive (20) which is connected to the axis (15) with an offset to the first eccentric drive (10); and

- a motor (30) which rotates the axis (15) to which first and second eccentric drives (10, 20) are connected.

## Description

### Field of the Disclosure

The present disclosure relates to a shaker for mixing fluidic samples in a container.

### Brief description of the related art

Automated analyser systems for use in clinical diagnostics and life sciences are produced by a number of companies. For example, STRATEC^{®} SE, Birkenfeld, Germany, produces a number of devices for specimen handling and detection for use in automated analyser systems and other laboratory instrumentation.

In automated analyser systems so-called shakers are used to process liquid samples. Liquid samples in containers are placed on a shaker plate. The shaker in automated analysis system uses a drive to shake the liquid in the container. The shaking of the shaker generates vibrations and imbalances throughout the whole automated analyser system.

Shaker which are currently used in analyser systems are so-called linear shaker which are actuated by an electric motor, wherein a linear movement of the motor is converted into a rotational movement using an eccentric drive. To compensate for the angular displacement, the connection between a shaking plate and a linking rod can be made through an elastic joint. During operation, the inertia of the moving mass of the shaking plate, together with the adjacent components, generates vibrations throughout the system. This mass will be further mentioned as mass1.

Published Chinese patent application CN 109 092 160 A discloses an automatic shaking device capable of regulating shaking rate and strength. The automatic shaking device comprises a rack, wherein a servo motor is fixed in one side of the rack, a turntable is fixed to the servo motor, a first connecting shaft is fixed to one side of the upper end of the turntable, a transmission rod is rotatably connected to the first connecting shaft and is rotatably connected with a second connecting shaft through a bearing, the second connecting shaft is fixed to the bottom of a first sliding block, adjusting mechanisms are arranged on the front side and the rear side of the upper end of the first sliding block, a base is fixed above the end, away from the servo motor, of the rack, two sides of a middle groove body of the base are provided with first sliding rails, the first sliding block slides in the first sliding rails, supporting plates are fixed to the left side and the right side of the upper end of the base, a third connecting shaftis fixed to the upper ends of the supporting plates and is rotatably connected with a beaker placement box through a bearing. By adopting the above structure, the shaking strength and rate of the shaking device can be adjusted, and the shaking device is convenient to use.

Disadvantages from known solutions relate to imbalances generated by the shaker due to the moving masses. The imbalance increases with increasing frequencies during shaking so that the solutions known from the prior art are limited regarding the maximal possible frequencies.

Thus, there is a need for a shaker avoiding the generation of imbalances so that no limitation of shaking frequencies is given.

### Summary of the Disclosure

The present disclosure provides a shaker for actuating a fluidic sample in a container, comprising:
- a shaking plate which connected by a first linking rod to a first eccentric drive which is connected to an axis;
- a counterweight which connected by a second linking rod to a second eccentric drive which if connected to the axis with an offset to the first eccentric drive;
- a motor which rotates the axis to which first and second eccentric drive are connected.

The first linking rod of a shaker according to the present disclosur is in an embodiment connected to a first elastic joint which is connected to the shaking plate.

It is also intended that the second linking rod is connected to a second elastic joint which is connected to the counterweight.

In another embodiment is the offset between first and second eccentric drive about 180°.

The shaking plate of a shaker according to the present disclosure rests in an embodiment on at least two spring bars.

It is further envisaged that the mass of shaking platform, first linking rod and first eccentric drive corresponds substantially to the mass of counterweight, second linking rod and second eccentric drive.

The first and second elastic joint have identical masses in an embodiment of a shaker according to the present disclosure.

It is envisaged that the counterweight of a shaker is exchangeable in an embodiment for adapting its mass.

It is envisaged that the motor rotates the axis to which first and second eccentric drives are connected.

The indicator of a shaker according to the present disclosure is mounted in an embodiment to the upper end of the axis and a light barrier is mounted perpendicular to the indicator configured for detecting the indicator.

It is envisaged that the indicator is a semicircle.

The shaker of claim 1, wherein the shaking plate is mounted to the first eccentric drive, and the counterweight is mounted to second eccentric drive, wherein shaking plate and first eccentric drive are located above counterweight and second eccentric drive .

An embodiment of the shaker is envisaged, wherein the shaking plate is mounted to the upper side of the first eccentric drive.

The shaker may comprise a first and second eccentric drive which are mounted with an offset to the axis which is actuated by the motor.

The offset between first and second eccentric drive of a shaker according to the present disclosure is 180°.

The foregoing summary is not intended to summarize each potential embodiment or every aspect of the present disclosure.

### Summary of the Figures

The disclosure will be described based on figures. It will be understood that the embodiments and aspects of the disclosure described in the figures are only examples and do not limit the protective scope of the claims in any way. The disclosure is defined by the claims and their equivalents. It will be understood that features of one aspect or embodiment of the disclosure can be combined with a feature of a different aspect or aspects of other embodiments of the disclosure, in which:
FIG. 1 shows an overview of an embodiment of a shaker according to the present disclosure.
FIG. 2 shows a sectional view through the embodiment shown in FIG. 1.
FIG. 3 shows an alternative embodiment with a counterweight.
FIG. 4 shows a flag on the upper end of the rotating axis for initializing of the device.
FIG. 5 shows a sectional view through the embodiment shown in FIG. 3.

### Detailed Description of the Disclosure and the Figures

The technical problem is solved by the independent claims. The dependent claims cover further specific embodiments of the disclosure.

The core of the disclosure relates to avoiding imbalances during shaking of consumables on the shaking plate by providing a counterweight. The term consumable relates to containers configured for receiving fluids like liquids or mixtures of liquids with solid particles and comprises tubes, vessels, cuvettes, strips, and multi-well plates.

The device according to the present disclosure uses a second mass that is moved in opposition to a first mass for compensating imbalances during shaking.

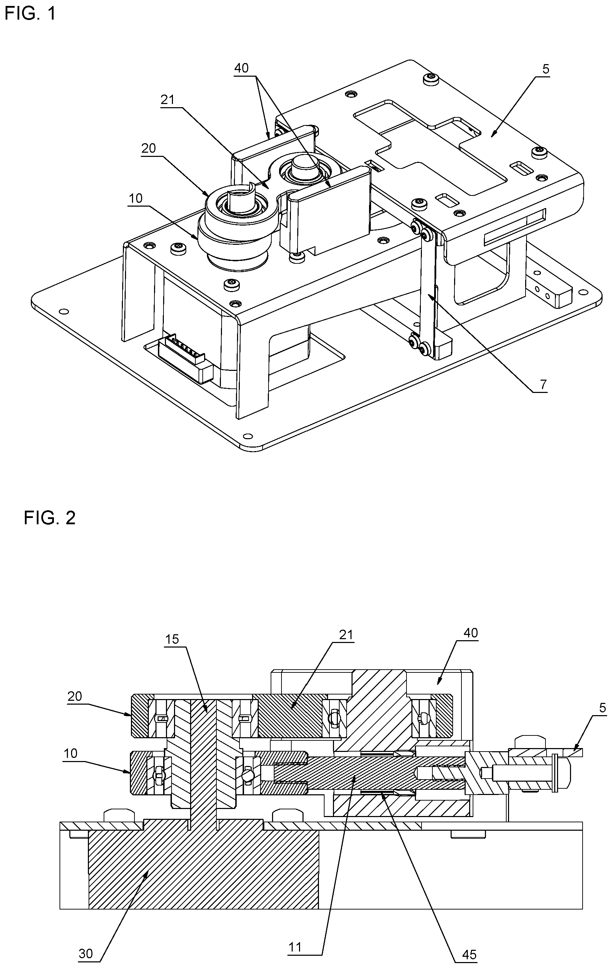

FIG. 1 shows an overview of an embodiment of a shaker according to the present disclosure. FIG. 2 shows a sectional view through parts of the embodiment shown in FIG. 1. The shaking plate 5 can be loaded manually or automatically with container (not shown) for shaking. As described above, the shaking plate 5 is intended to carry at least one container comprising a fluid for its mixing. It is driven by a first eccentric drive 10 to obtain a linear movement from the axis 15 which is rotated by a motor 30. The shaking plate 5 is connected by a first linking rod 11 (comp. FIG. 2) to the first eccentric drive 10 and it rests on at least three spring bars 7 (e.g. flat springs) to support the motion of the shaking plate 5. The shaking movement can be achieved by the spring bars 7 in their elastically deformation range only.

In order to compensate the inertia of mass1 from the shaking plate 5, together with its connected components, a counterweight 40 is introduced in the system (comp. FIG. 1 and FIG. 2). Mass2 relates to the counterweight 40 and connected components and moves in the opposite direction than mass1, with the same magnitude and the same mass as mass1.

Mass1 comprises the first eccentric drive 10 with the first linking rod 11, the weight of the shaking plate 5. Optionally an average weight of container comprising a fluid which are placed onto shaking plate 5 can be added to Mass1. Mass2 comprises the second eccentric drive 20, second linking rod 21, and counterweight 40.

FIG. 2 shows that counterweight 40 is connected to its second eccentric drive 20 via a second linking rod 21. The second eccentric drive 20 of the counterweight 40 is connected by an offset of 180° in comparison to the first eccentric drive 11 with axis 15. Motion is provided by motor 30 and motion control is generally achieved by motor controller electronics and standard sensors e.g. a light barrier (not shown).

FIG. 2 shows that the first connecting rod 11 is used as a kind of guide for the counterweight 40 in order to align the axis of translation of both mass1 and mass2 as depicted in the sectional view in FIG. 2. The first connecting rod 11 is surrounded by slide bearing 45 which allows counterweight 40 to slide through slide bearing 45 along first connecting rod 11.

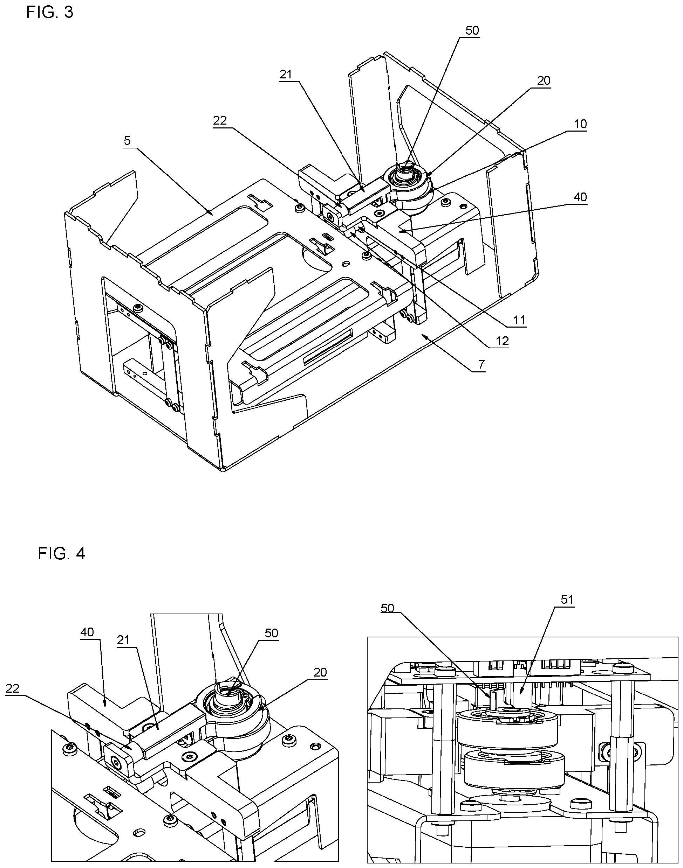

An alternative embodiment with a counterweight shown FIG. 3. In this embodiment, counterweight 40 rests on two spring bars 7, e.g. flat springs, on each side of the counterweight 40 and it is connected via a second linking rod 21 and second elastic joint 22 to the second eccentric drive 20. To compensate the angular displacement, the connection between the shaking plate 5 and the first linking rod is made through a first elastic joint 12.

FIG. 4 shows a flag 50 for initializing the device, wherein the flag 50 is a semicircle and is positioned at the upper end of the axis 15 (not visible, compare FIG. 2) which is rotated by the motor. A printed circuit board (not shown) is located above the second eccentric drive 20 which is connected by a second linking rod 21 and second elastic joint 22 to counterweight 40. The printed circuit board comprises a light barrier 51 which is interrupted by the rotating flag 50 for initializing the drive.

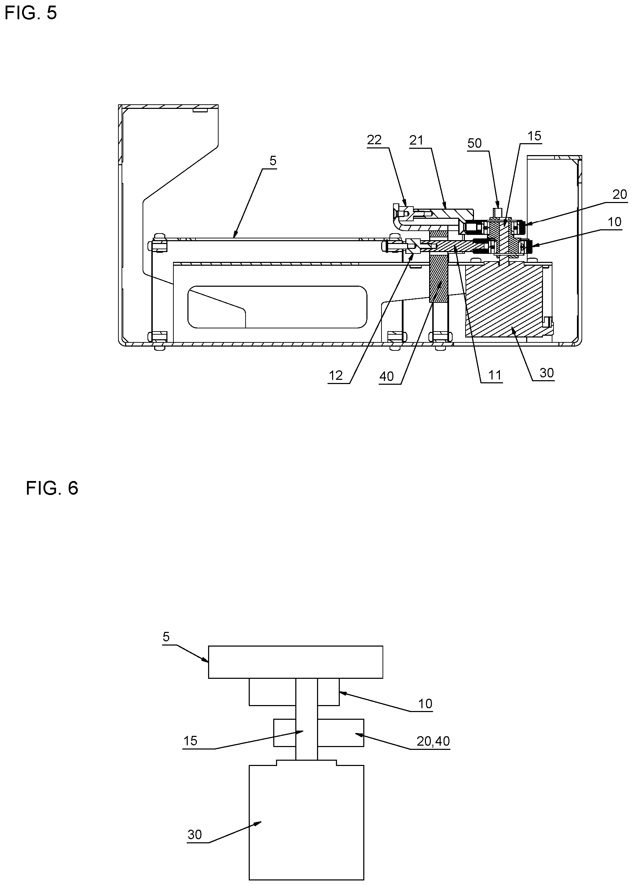

FIG. 5 shows a sectional view through the embodiment shown in FIG. 3. Shaking plate 5 is connected by a first elastic joint 12 and a first linking rod 11 to the first eccentric drive 10 which is attached to rotating axis 15 that is driven by motor 30. The counterweight 40 is connected through the second elastic joint 22 and second linking rod 21 to the second eccentric drive 20 which is also attached to rotating axis 15 with an offset.

FIG. 6 shows an alternative embodiment for an orbital shaker for generating an orbital movement of shaking plate 5. In this embodiment, the shaking plate 5 is located directly above the first eccentric drive 10, both forming mass1. The second eccentric drive 20 and counterweight 40 are located below the first eccentric drive 10, forming mass2. Mass1 and mass2 are both arranged on the same axis 15 with an offset of 180° so that mass2 counterbalances mass1.

The advantageous of a device according to the present disclosure can be summarised as follows:
- Reduction of the imbalance during shaking of the container with sample.
- High mixing frequencies are possible without causing imbalances.
- Reliability and high cycle number of active components possible.
- Wear reduction in active driven components and wear reduction in the motor bearings.

The foregoing description of preferred and other embodiments is not intended to limit or restrict the scope or applicability of the inventive concepts conceived of by the Applicants. It will be appreciated with the benefit of the present disclosure that features described above in accordance with any embodiment or aspect of the disclosed subject matter can be utilized, either alone or in combination, with any other described feature, in any other embodiment or aspect of the disclosed subject matter.

### Reference Numerals

- 5: shaking plate
- 7: spring bar
- 10: first eccentric drive
- 11: first linking rod
- 12: first elastic joint
- 15: axis
- 20: second eccentric drive
- 21: second linking rod
- 22: second elastic joint
- 30: motor
- 40: counterweight
- 45: slide bearing
- 50: flag
- 51: light barrier

## Claims

1. A shaker for actuating a fluidic sample in a container, comprising:
- a first mass from the following components: a shaking plate (5) which connected by a first linking rod (11) to a first eccentric drive (10) which is connected to an axis (15);
- a second mass from the following components which is moved in opposition to the first mass: a counterweight (40) which connected by a second linking rod (21) to a second eccentric drive (20) which if connected to the axis (15) with an offset to the first eccentric drive (10);
- a motor (30) which rotates the axis (15) to which first and second eccentric drives (10, 20) are connected.

2. The shaker of claim 1, wherein the first linking rod (11) is connected to a first elastic joint (12) which is connected to the shaking plate (5).

3. The shaker of claim 1 or 2, wherein the second linking rod (21) is connected to a second elastic (22) joint which is connected to the counterweight.

4. The shaker of any one of claims 1 to 3, wherein the offset between first and second eccentric drive (10, 20) is about 180°.

5. The shaker of any one of claims 1 to 4, wherein the shaking plate (5) rests on at least two spring bars (7).

6. The shaker of any one of claims 1 to 5, wherein the mass of shaking plate (5), first linking rod (11) and first eccentric drive (10) corresponds substantially to the mass of counterweight (40), second linking rod (21) and second eccentric drive (20).

7. The shaker according to any one of claims 2 to 6, wherein first and second elastic joints (12, 22) have identical masses.

8. The shaker according to any one of claims 1 to 7, wherein the counterweight (40) is exchangeable for adapting its mass.

9. The shaker according to any one of claims 1 to 8, wherein the motor (30) rotates the axis (15) to which first and second eccentric drives (10, 20) are connected.

10. The shaker according to any one of claims 1 to 9, wherein a flag (50) is mounted to the upper end of the axis (15) and a light barrier (51) is mounted perpendicular to the flag (50) configured for detecting the flag (50).

11. The shaker of claim 10, wherein the flag (50) is a semicircle.

12. The shaker of claim 1, wherein the shaking plate (5) is mounted to the first eccentric drive (10), and the counterweight (40) is mounted to second eccentric drive (20), wherein shaking plate (5) and first eccentric drive (10) are located above counterweight (40) and second eccentric drive (20).

13. The shaker of claim 12, wherein the shaking plate (5) is mounted to the upper side of the first eccentric drive (10).

14. The shaker of claim 12 or 13, wherein first and second eccentric drives (10, 20) are mounted with an offset to the axis (15) which is actuated by the motor (30).

15. The shaker of claim 14, wherein the offset between first and second eccentric drive is 180°.
